# EUROPÄISCHE PATENTSCHRIFT

(11) **EP 4 305 952 B1**
(45) Veröffentlichungstag und Bekanntmachung des Hinweises auf die Patenterteilung: **23.04.2025**
(21) Anmeldenummer: 23181336.1
(22) Anmeldetag: 26.06.2023
(51) Int. Cl.: A01D 90/00

(54) **LANDWIRTSCHAFTLICHER LADEWAGEN**
AGRICULTURAL LOADER
REMORQUE AGRICOLE

(30) Priorität: 14.07.2022 DE 202022103972 U
(43) Veröffentlichungstag der Anmeldung: 17.01.2024
(73) Patentinhaber: Pöttinger Landtechnik GmbH, 4710 Grieskirchen (AT)
(72) Erfinder: Marböck, Simon, 4710 Grieskirchen (AT); Pointner, Walter, 4710 Grieskirchen (AT)
(74) Vertreter: Thoma, Michael

(56) Entgegenhaltungen:
- EP-A2- 0 569 039
- EP-B1- 3 173 286
- DE-U- 1 930 689
- DE-U- 1 990 678

## Beschreibung

Die vorliegende Erfindung betrifft einen Ladewagen für landwirtschaftliches Erntegut, mit einer Aufnahmevorrichtung zum Aufnehmen des Ernteguts vom Boden, einem Erntegutspeicher für das aufgenommene Erntegut, sowie einem Kratzboden zum Verteilen und Fördern des Ernteguts im Erntegutspeicher, wobei der Erntegutspeicher Seitenwände umfasst, die zumindest in ihrem oberen Teil einen fachwerkartigen Profilaufbau aus Längs- und Stehprofilen besitzen.

Solche Ladewagen sind beispielsweise aus den Schriften DE 19 30 689 U, EP 31 73 286 B1 und DE 19 90 678 U bekannt, die verschiedene Klappmechanismen zeigen, um die Seitenwände des Erntegutspeichers in der Höhe verändern zu können. Die EP 0 569 039 A2 zeigt ferner einen Lkw, der auf feste Seitenwände für den Laderaum verzichtet und zum Schutz vor Witterungseinflüssen nur eine spannbare Abdeckplane vorsieht.

Der landwirtschaftliche Ladewagen der genannten Art besitzt üblicherweise einen Maschinenrahmen, der den genannten Erntegutspeicher trägt und durch ein ein- oder mehrachsiges Fahrwerk am Boden abgestützt ist, und kann regelmäßig an einen Schlepper angebaut werden, beispielsweise durch eine Deichsel, die am Maschinenrahmen befestigt ist und am Zugmaul des Schleppers angelenkt werden kann.

Die Aufnahmevorrichtung zum Aufnehmen des Ernteguts vom Boden wird üblicherweise als Pickup bezeichnet und kann eine rotierend umlaufende Stachelwalze umfassen, deren Zinken gesteuert oder ungesteuert umlaufen können. Das aufgenommene Erntegut wird üblicherweise an einen Förderrotor übergeben, der das Erntegut in den Erntegutspeicher fördert, wobei dem Förderrotor ein Schneidwerk zugeordnet sein kann, um das halm- und/oder blattartige Erntegut auf seinem Weg in den Erntegutspeicher zu zerschneiden. Der genannte Kratzboden dient dann im Erntegutspeicher dazu, den sich im Erntegutspeicher aufbauenden Futterstock zu verteilen und auch beim Entladen des Erntegutspeichers das Erntegut zur geöffneten Entladeöffnung hin zu befördern, die beispielsweise durch eine Heckklappe verschlossen sein und ggf. mit Dosierorganen wie Dosierwalzen ausgestattet sein kann.

Der genannte Erntegutspeicher wird dabei üblicherweise von aufrechten Seitenwänden sowie Front- und Rückwänden begrenzt, wobei die Rückwand beispielsweise die genannte Entladeklappe bilden kann. Eine Oberseite des Erntegutspeichers kann durch Seile oder auch ein Netz oder Strang begrenzt sein, um das Erntegut nach oben hin zu sichern.

Um die Bordwände bzw. die Aufbauten, die den Erntegutspeicher begrenzen, leichtgewichtig ausführen zu können und Gewicht zu sparen, ist es bekannt, die Seitenwände nur im unteren Teil als Blechkonstruktion auszuführen bzw. mit einem geschlossenen Wandprofil zu gestalten, und den oberen Teil der Seitenwände aus stab- oder strebenartigen Längs- und Stehprofilen fachwerkartig aufzubauen. Die Gewichtsersparnis gerade im oberen Teil wirkt sich günstig auf den Gesamtschwerpunkt des Ladewagens aus. Zudem ist der Querdruck des Erntegutstocks auf die Seitenwände in deren oberem Teil geringer als im unteren Teil der Seitenwände.

Ein solcher Profilaufbau der Seitenwände aus stabförmigen Längs- und Stehprofilen wird bisweilen als "Dürrfutteraufbau" bezeichnet.

Neben der Gewichtsersparnis im oberen Teil der Seitenwände wird ein solcher Dürrfutteraufbau auch gerne verwendet, um die Seitenwände abklappbar bzw. einklappbar auszubilden, was beispielsweise hilfreich ist, um mit dem Ladewagen in Heustadel einfahren zu können, deren Einfahrtshöhe begrenzt ist. Der stabförmige Profilaufbau kann dabei vorteilhafterweise in sich zusammengeklappt werden, so dass keine seitlich weit ausladenden Schwenkbewegungen entstehen. Beispielsweise können die pfosten- bzw. stabförmigen Stehprofile um liegende Querachsen quer zur Fahrtrichtung schwenkbar gelagert sein, so dass die Längsprofile durch Schwenken der Stehprofile beispielsweise nach hinten aufeinander zu fahren bzw. aufeinander geschwenkt werden.

Solche Ladewagen mit Dürrfutteraufbau werden beispielsweise von der Firma Pöttinger unter der Produktbezeichnung "EUROBOSS" vertrieben. In der Patentliteratur zeigen beispielsweise die Schriften EP 0 064 567 A1, DE 15 07 433 A oder DE 10 2006 014 126 B4 Ladewagen mit einem solchen Dürrfutteraufbau.

Auch wenn ein solcher Dürrfutteraufbau Gewicht spart und den Schwerpunkt nach unten bringt und bei zusammenklappbarer Ausführung das Einfahren in Ställe oder Stadel mit zu niedrigen Einfahrten ermöglicht, ergibt sich andererseits das Problem, dass einerseits das Futter an den Seitenwänden im Bereich des Profilsaufbaus herausfallen und umgekehrt auch Schmutz hineinfallen kann, beispielsweise beim Streifen von Hecken oder Ästen, so dass es zu einer Futterverschmutzung kommen kann.

Hiervon ausgehend liegt der vorliegenden Erfindung die Aufgabe zugrunde, einen verbesserten Ladewagen der genannten Art zu schaffen, der die Nachteile des Standes der Technik vermeidet und letzteren in vorteilhafter Weise weiterbildet. Insbesondere soll ein verbesserter Aufbau der den Erntegutspeicher begrenzenden Bordwände geschaffen werden, der die leichtgewichtige Bauweise eines Dürrfutteraufbaus mit niedrigem Schwerpunkt beibehält, ohne das leidige Problem von Dürrfutterverlusten oder -verschmutzungen zu haben.

Erfindungsgemäß wird die genannte Aufgabe durch einen Ladewagen gemäß Anspruch 1 gelöst. Bevorzugten Ausgestaltungen der Erfindung sind Gegenstand der abhängigen Ansprüche.

Es wird also vorgeschlagen, den Dürrfutteraufbau mit einer dünnen, nachgiebigen Verkleidung zu versehen, die die spaltförmigen Öffnungen zwischen den Profilen des Dürrfutteraufbaus verschließt, um das Herausfahren von Erntegut bzw. das Hineinfahren von Verschmutzungen zu vermeiden. Erfindungsgemäß sind die Seitenwände des Erntegutspeichers im Bereich des genannten Profilaufbaus mit einer flächigen, tuchartig biegsamen Bespannung verkleidet. Durch eine solche tuchartig biegsame Bespannung bleibt der Gewichts- und Schwerpunktsvorteil des Dürrfutteraufbaus erhalten, während gleichzeitig die Problematik des durchfallenden Ernteguts bzw. der Verschmutzung des Ernteguts gelöst werden kann.

Als Verkleidung bzw. Bespannung kann dabei ein Netz oder eine Plane oder eine Folie oder ein gewebeartiges Tuch oder auch eine Mischung hieraus vorgesehen sein, beispielsweise in Form eines mehrschichtigen Tuch-Netz-Gemischs oder in Form einer doppelschichtigen Folie, zwischen deren Folienschichten ein Gewebe sandwichartig eingebettet sein kann, wie dies beispielsweise bei modernen Segeln von Segelbooten oder hochfesten Sammelbehältnissen bekannt ist.

Vorzugsweise ist die Bespannung zumindest einigermaßen durchsichtig, um dem Maschinenführer die Blickkontrolle des Füllstands des Laderaums zu ermöglichen.

Die genannte netz- oder planenartige Bespannung bzw. Verkleidung kann insbesondere an den Längs- und/oder Stehprofilen des Profilaufbaus befestigt sein, insbesondere zumindest an einem oberen Längsprofil und einem unteren Längsprofil des Dürrfutteraufbaus, so dass die netz- bzw. planenartige Verkleidung von den oberen und unteren Längsprofilen des Dürrfutteraufbaus sozusagen aufgespannt wird.

Gegebenenfalls können auch weitere Befestigungspunkte an von der Höhe her mittleren bzw. dazwischen liegenden Längsprofilen vorgesehen sein. Alternativ oder zusätzlich kann die netz- bzw. planenartige Verkleidung auch an den Stehprofilen des Dürrfutteraufbaus befestigt sein, insbesondere an Stehprofilen am hinteren und/oder vorderen Endabschnitt des Dürrfutteraufbaus der Seitenwände.

Der Profilaufbau ist klappbar und/oder wegschwenkbar ausgebildet, so dass der obere Teil der Seitenwände des Erntegutspeichers weggeklappt werden kann, um bei zu niedrigen Einfahrten trotzdem in Stadel bzw. Ställe einfahren zu können. Insbesondere ist der genannte Profilaufbau der Seitenwände in sich zusammenklappbar ausgebildet, wobei die Längsprofile und/oder die Stehprofile unter Verformung der angebrachten netz- bzw. planenartigen Bespannung zusammenfahren bzw. aufeinander fahren können.

Dabei sind die Stehprofile um liegende Querachsen, die sich quer zur Fläche der Seitenwandung erstrecken, schwenkbar gelagert, so dass die Stehprofile aus einer stehenden Arbeitsstellung, in der der Erntegutspeicher seine volle Höhe hat, in eine liegende Einfahrstellung verbracht werden können, in der der Ladewagen eine reduzierte Höhe hat, um niedrige Einfahrten passieren zu können. Die an den Stehprofilen gelenkig angelenkten Längsprofile fahren dabei aufeinander zu bzw. verkleinert sich der Abstand der Längsprofile voneinander, wenn die Stehprofile umgelegt werden. Die an den Profilen angelenkte netz- bzw. planenartige Bespannung ist vorteilhafterweise ausreichend biegsam, beispielsweise tuchartig biegeschlaff ausgebildet, so dass sie sich in Falten legen bzw. verformen kann, um das Zusammenklappen des Profilaufbaus zu erlauben und mitzumachen.

Vorteilhafterweise können die genannten Stehprofile des Profilaufbaus aus ihrer stehenden Arbeitsstellung entgegen der Fahrtrichtung nach hinten in die liegende Passivstellung verschwenkt werden. Grundsätzlich wäre es alternativ aber auch möglich, den Profilaufbau nach vorne zusammen zu schwenken, wenn eine Kollisionsproblematik mit dem Schlepper nicht zum Tragen kommt bzw. keine Rolle spielt.

Um das Zusammenklappen des Profilaufbaus nicht zu behindern, ist die netz- bzw. planenartige Bespannung an den Längsprofilen des Profilaufbaus verschieblich angelenkt.

Vorteilhafterweise können die verschiebbaren Befestigungsmittel zum Befestigen der Bespannung am Profilaufbau Gleiter bzw. Gleitführungselemente umfassen, die ein Entlanggleiten der netz- bzw. planenartigen Bespannung an einem jeweiligen Längsprofil des Profilaufbaus gestattet, beispielsweise in ähnlicher Weise wie bei der Befestigung eines Vorhangs durch Gleiter an einer Vorhangschiene.

Beispielsweise können entlang eines Längsprofils des Profilaufbaus mehrere Gleitführungselemente verteilt angeordnet sein und/oder in Längsrichtung eines solchen Längsprofils verteilt an der netz- bzw. planenartigen Bespannung befestigt sein.

Alternativ oder zusätzlich können die Befestigungsmittel, mittels derer die netz- bzw. planenartige Bespannung am Profilaufbau befestigt ist, auch elastisch ausgebildet sein, um durch elastische Verformung gewisse Relativbewegungen zwischen Verspannung und Profilaufbau zuzulassen bzw. zu kompensieren.

Insbesondere können in vorteilhafter Weiterbildung der Erfindung die Befestigungsmittel zum Befestigen der Bespannung am Profilaufbau ein elastisch dehnbares Befestigungsseil bzw. ein seilartiges elastisch dehnbares Zugmittel umfassen, das beispielsweise nach Art eines Expanders ausgebildet sein kann.

Ein solches elastisch dehnbares Befestigungsseil kann beispielsweise durch Ösen und/oder durch eine oder mehrere Längsnuten durch die netz- bzw. planenartige Bespannung geführt sein, so dass die Bespannung relativ zum Befestigungsseil verschoben werden kann. Alternativ oder zusätzlich ist es aber auch möglich, das genannte Befestigungsseil abschnittsweise und/oder punktuell am Material der Bespannung zu fixieren, beispielsweise festzunähen und/oder durch Klemmbügel festzuklemmen und/oder festzukleben und/oder einzuschweißen oder in anderer Weise zu fixieren.

Profilaufbauseitig kann das genannte Befestigungsseil vorteilhafterweise an einem oder mehreren Befestigungspunkten längsverschieblich eingehängt bzw. befestigt sein, beispielsweise an geschützten Ösen angehängt oder durch Ringösen hindurchgeführt und/oder an Haken eingehängt sein. Alternativ oder zusätzlich können am Befestigungsseil auch Gleiter angebracht sein, die in einer Nut bzw. Ausnehmung am Profilaufbau eingehängt sein können.

Vorteilhafterweise kann das genannte Befestigungsseil oder der genannte Befestigungsgurt an der Bespannung mehrere voneinander beabstandete Befestigungs- bzw. Anlenkpunkte oder -abschnitte und dazwischen liegend frei verlaufende Abschnitte aufweisen und an den genannten frei verlaufenden Abschnitten Befestigungs- bzw. Anlenkpunkte am Profilaufbau aufweisen. Beispielsweise kann das Befestigungsseil wechselweise durch einen Anlenkpunkt an der Bespannung und einen Anlenkpunkt am Profilaufbau gefädelt sein.

Die Bespannung kann an nur einer Seite, beispielsweise der Oberseite, verschieblich am Profilaufbau befestigt sein, während eine gegenüberliegende Seite, beispielsweise die Unterseite der Bespannung fest am Profilaufbau fixiert sein kann. Grundsätzlich wäre es auch möglich, die verschiebliche Befestigung an der Unterseite und die fixe Befestigung an der Oberseite vorzusehen. Alternativ wäre es auch möglich, sowohl Ober- als auch Unterseite längsverschieblich am Profilaufbau zu befestigen.

Die Bespannung kann sich nur über einen Teil der Seitenwand des Erntegutspeichers erstrecken, insbesondere den Profilaufbau vollständig überdecken, während ein anderer Teil der Seitenwände, insbesondere deren unterer Teil von der Bespannung ausgespart sein kann. In dem genannten unteren Abschnitt der Seitenwände können letztere beispielsweise durch eine starre Verblechung geschlossen ausgebildet sein.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Gesamtansicht eines Ladewagens mit einem Dürrfutteraufbau des Erntegutspeichers nach einer vorteilhaften Ausführung der Erfindung, wobei die Seitenwände des Erntegutspeichers im Bereich des Profilaufbaus innenseitig mit einer netz- oder planenartigen Bespannung verkleidet sind,
- Fig. 2:: eine perspektivische Ansicht des oberen Teils der Laderaumwandungen des Erntegutspeichers, die den Profilaufbau und die innenseitig daran angebrachte Bespannung zeigt,
- Fig. 3:: eine perspektivische Ansicht des Profilaufbaus des oberen Teils der Seitenwände des Erntegutspeichers ähnlich Fig. 2, wobei der Profilaufbau ein Stück weit nach hinten verschwenkt ist, um die Höhe des Erntegutspeichers zu reduzieren,
- Fig. 4:: eine perspektivische Ansicht des Profilaufbaus ähnlich den Figuren 2 und 3 in einer nochmals weiter zusammengeschwenkten bzw. abgesenkten Stellung,
- Fig. 5:: eine perspektivische Ansicht des Profilaufbaus in der zusammengeschwenkten, abgesenkten Stellung ähnlich Fig. 4, wobei zusätzlich zur Fig. 4 die innenseitig auf dem Profilaufbau angebrachte Bespannung dargestellt ist,
- Fig. 6:: eine ausschnittsweise, perspektivische Darstellung der Befestigung der Bespannung am Profilaufbau mittels eines Befestigungsseils bzw. -kabels, und
- Fig. 7:: eine ausschnittsweise, perspektivische Darstellung ähnlich Fig. 6, die eine lösbare Befestigung der Bespannung am Profilaufbau mittels eines Befestigungsseils bzw. -kabels und Karabinerhaken zeigt.

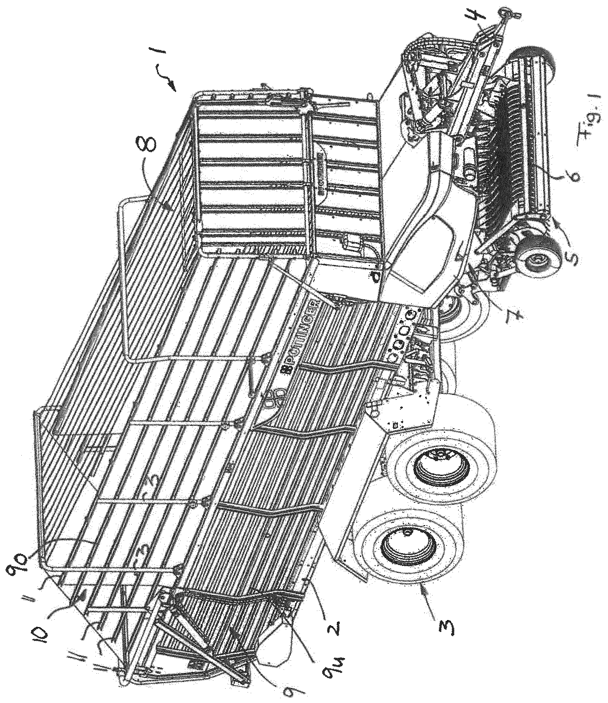

Wie Fig. 1 zeigt, umfasst der Ladewagen 1 einen Maschinenrahmen 2, der durch ein Fahrwerk 3 am Boden abgestützt ist. Das genannte Fahrwerk 3 kann dabei eine oder mehrere Fahrwerksachsen umfassen.

Um den Ladewagen 1 an einem nicht gezeigten Schlepper anlenken zu können, kann frontseitig am Maschinenrahmen 2 eine Anbauvorrichtung beispielsweise in Form einer Deichsel 4 angebracht sein, die am Zugmaul eines Schleppers eingehängt werden kann.

Um Erntegut vom Boden aufnehmen zu können, umfasst der Ladewagen 1 eine Aufnahmevorrichtung 5, die beispielsweise in an sich bekannter Weise eine Pickup mit einer rotierenden Stachelwalze 6 umfassen kann, vgl. Fig. 1.

Das aufgenommene Erntegut kann von der Aufnahmevorrichtung 5 an einen Weiterförderer 7 beispielsweise in Form eines Förderrotors übergeben werden, der das Erntegut in einen Erntegutspeicher 8 fördert, ggf. unter Zusammenwirken mit einem Schneidwerk, das das Erntegut auf seinem Weg in den Erntegutspeicher 8 zerschneidet.

Der genannte Erntegutspeicher 8 wird vom Maschinenrahmen 2 getragen und von zwei Seitenwänden 9 sowie Front- und Rückwänden 10, 11 begrenzt.

Wie die Figuren verdeutlichen, können die Seitenwände 9 in einem unteren Teilabschnitt 9u starr ausgebildet sein, beispielsweise innenseitig mit einem Blech verkleidet sein. Unabhängig hiervon kann der starre untere Teilabschnitt 9u beispielsweise - grob gesprochen - die untere Hälfte der Seitenwände bilden.

Ein oberer Teilabschnitt 9o der Seitenwände 9 umfasst einen stab- bzw. fachwerkartigen Profilaufbau 10 aus streben- bzw. stabartigen Längsprofilen 11 und pfosten- bzw. stab- oder strebenartigen Stehprofilen 12, die fachwerkartig an Knotenpunkten miteinander verbunden sind.

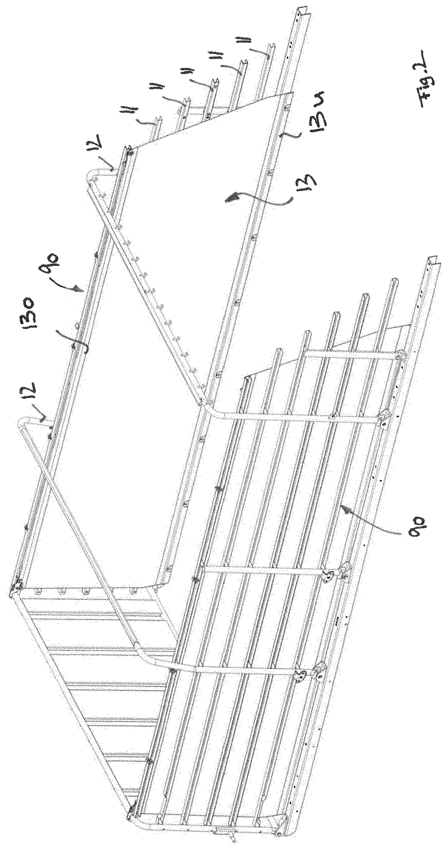

Zwischen den Längsprofilen 11 sind spaltförmige Zwischenräume ausgespart, vgl. Fig. 1 und 2.

Die genannten Stehprofile 12 können auf einer Außenseite der Längsprofile 11 angeordnet sein, so dass die Längsprofile 11 eine glatte Innenhüllfläche des Laderaums definieren können.

An der Innenseite des genannten Profilaufbaus 10 ist eine netz- oder planenartige, tuchartig biegsame Bespannung 13 vorgesehen, die den Profilaufbau 10 verkleidet und die Zwischenräume zwischen den Längsprofilen 11 verschließt. Die genannte Bespannung 13 bildet sozusagen eine Haut bzw. Innenhaut über dem Gerippe des Profilaufbaus 10. Die genannte Bespannung 13 ist ein flächiges Gebilde, das biegeschlaff oder elastisch biegsam sein kann. Insbesondere kann die Bespannung 13 aus einem feinmaschigen Netz bestehen, wobei aber auch eine Plane oder mehrschichtige Folie oder ein gewebtes Tuch vorgesehen sein kann. Ein Netz besitzt den Vorteil, dass es nicht nur das Herausfallen von Erntegut verhindert, sondern auch in gewissem Maße transparent ist, so dass ein Maschinenführer den Füllstand des Ladewagens erkennen kann.

Wie die Figuren zeigen, kann die Bespannung 13 die gesamte Fläche des Profilaufbaus 10 verkleiden. Unabhängig hiervon kann die Bespannung 13 den unteren Teilabschnitt 9u der Seitenwände 9 aussparen.

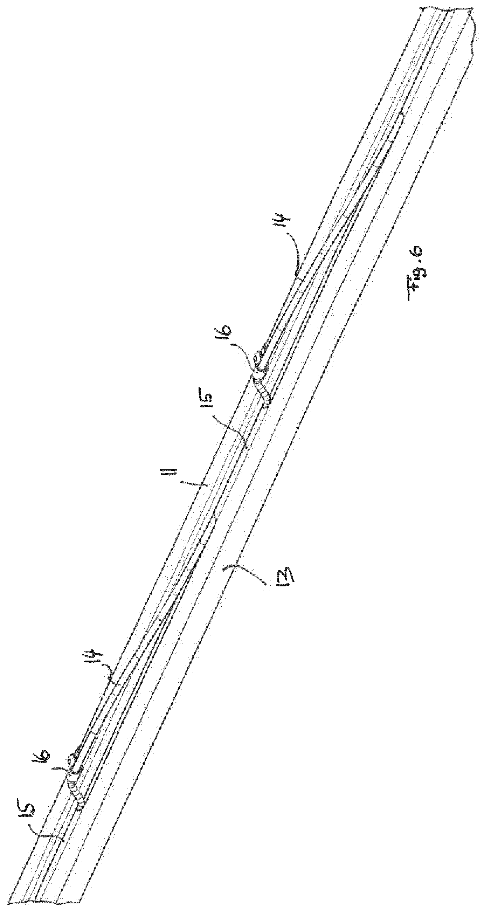

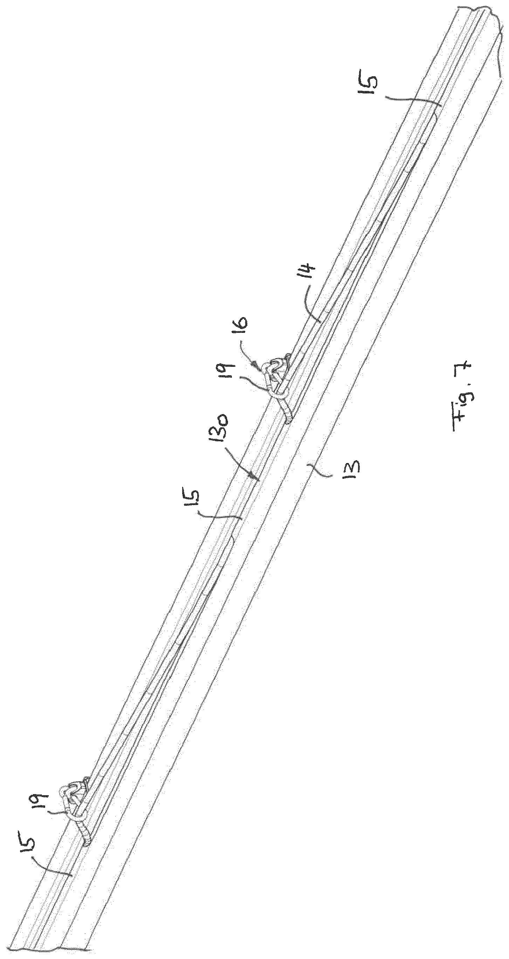

Wie insbesondere Fig. 6 und Fig. 7 zeigen, kann die Bespannung 13 an ihrem oberen Randabschnitt 13o vorteilhafterweise mittels eines Befestigungsseils, insbesondere einem elastisch dehnbaren bzw. längbaren Befestigungsseils am Profilaufbau 10 befestigt sein, wobei das genannte Befestigungsseil 14 auch ein Gurt oder ein Kabel oder ein schlauchartiges, längliches Zugmittel sein kann und insofern im genannten Sinne breit zu verstehen ist.

Wie Fig. 6 zeigt, kann das Befestigungsseil 14 durch Taschen 15 und/oder Ösen oder dergleichen durch die Bespannung 13 hindurchgeführt sein und zwischen den Bespannungstaschen 15 freiliegend verlaufen. In den freiliegenden Bereichen kann das Befestigungsseil 14 am Profilaufbau 10 befestigt, vorzugsweise längsverschieblich geführt sein. Beispielsweise kann das Befestigungsseil 14 am Profilaufbau 10 an Ösen oder Haken oder ähnlichen Gleitführungs- und/oder Befestigungsmitteln 16 eingehängt oder geführt sein.

Insbesondere kann das Befestigungsseil 14 hin- und hergehend einmal an der Bespannung 13 und einmal am Profilaufbau 10, insbesondere an einem oberen Längsprofil 11 befestigt bzw. angelenkt sein, vgl. Fig. 6 und Fig. 7.

Wie Fig. 2 zeigt, kann die Bespannung 13 an ihrem unteren Randabschnitt 13u am Profilaufbau 10 unverschieblich befestigt sein, beispielsweise mittels einer Verschraubung, einer Klemmleiste, Patentösen oder ähnlichen Befestigungsmitteln. Alternativ wäre es aber auch möglich, die Bespannung 13 an ihrem unteren Randabschnitt 13u verschieblich und an ihrem oberen Randabschnitt 13o unverschieblich zu befestigen.

Vorteilhafterweise kann die genannte Bespannung 13 am Profilaufbau 10 lösbar befestigt sein, um die Bespannung 13 bei Bedarf abnehmen und austauschen und/oder den Ladewagen auch ohne Bespannung 13 betreiben zu können. Beispielsweise kann das genannte Befestigungsseil 14 mittels Karabinerhaken 19 am Profilaufbau 10 lösbar befestigt werden, die gleichzeitig als Gleitführungsmittel 16 fungieren können, vgl. Fig. 7.

Durch die längsverschiebliche Befestigung der Bespannung 13 am Profilaufbau 10 kann der genannte Profilaufbau 10 in an sich bekannter Weise zusammengeklappt werden, ohne dass die Bespannung 13 reißt oder sich verspannt bzw. den Klappvorgang des Profilaufbaus 10 behindern würde.

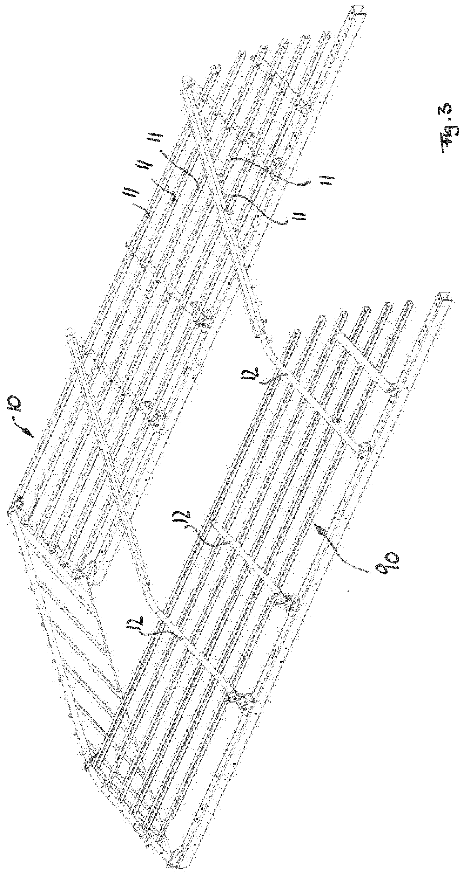

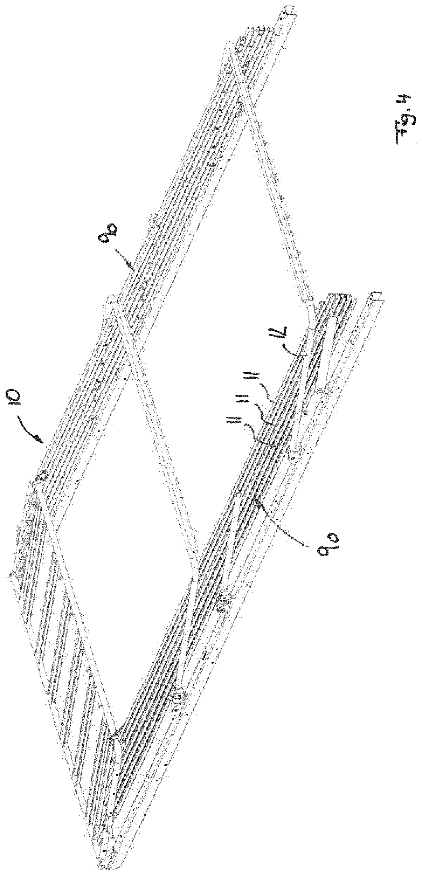

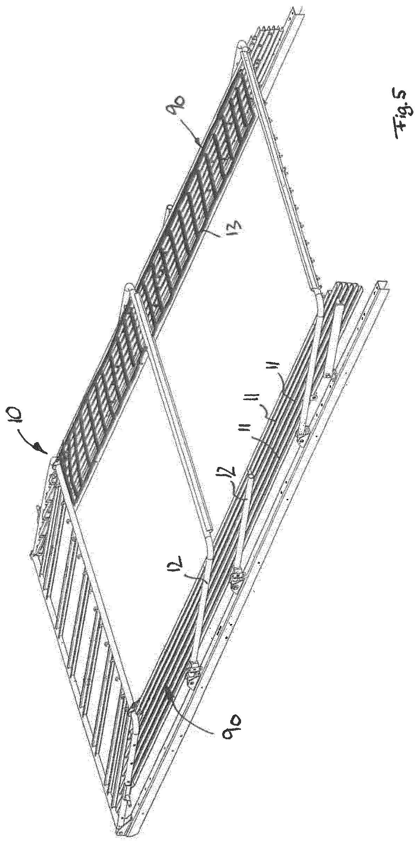

Wie die Figuren 2-5 verdeutlichen, können insbesondere die vorgenannten Stehprofile 12 um liegende, sich quer zur Seitenwand 9 erstreckende Schwenkachsen 17 schwenkbar an dem unteren Teilabschnitt 9u der jeweiligen Seitenwand 9 gelagert sein, so dass die genannten Stehprofile 12 aus ihrer stehenden Arbeitsstellung in die in Fig. 5 und in Fig. 4 gezeigte, näherungsweise liegende Stellung verschwenkt werden können. Die Längsprofile 11 sind an ihren Verbindungspunkten zu den Stehprofilen 12 an den genannten Stehprofilen 12 gelenkig, insbesondere um liegende, quer zur Fahrtrichtung ausgerichtete Schwenkachsen schwenkbar gelagert, so dass der Profilaufbau 10 in sich, d.h. näherungsweise in der Ebene der Seitenwand 9 zusammenklappbar ist.

Die am Profilaufbau 10 befestigte Bespannung 13 legt bzw. faltet sich dabei zusammen, wobei sich die Bespannung 13 an ihrem oberen Randabschnitt und/oder an ihrem unteren Randabschnitt entlang dem jeweiligen Längsprofil 11 des Profilaufbaus 10 verschieben kann.

## Patentansprüche

1. Ladewagen für landwirtschaftliches Erntegut, mit einer Aufnahmevorrichtung (5) zum Aufnehmen von Erntegut vom Boden, einem Erntegutspeicher (8) zum Speichern des aufgenommenen Ernteguts, sowie einem Kratzboden (18) zum Verteilen und Fördern des Ernteguts im Erntegutspeicher (8), wobei der Erntegutspeicher (8) Seitenwände (9) umfasst, die zumindest in ihrem oberen Teil (9o) einen stab- oder fachwerkartigen Profilaufbau (10) aus Längs- und Stehprofilen (11, 12) aufweisen, wobei die Seitenwände (9) durch Verschwenken der genannten Stehprofile (12) um liegende Querachsen (17), unter gelenkiger Verbindung mit den Längsprofilen (11), in sich zusammenklappbar sind, **dadurch gekennzeichnet, dass** die Seitenwände (9) im Bereich des genannten Profilaufbaus (10) mit einer flächigen, tuchartig biegsamen Bespannung (13) verkleidet sind, die an ihrem oberen und/oder unteren Randabschnitt (13O, 13U) längsverschieblich an den genannten Seitenwänden (9) geführt ist.

2. Ladewagen nach dem vorhergehenden Anspruch, wobei die genannte Bespannung (13) ein Netz oder eine Plane umfasst, das/die an den Längs- und/oder Stehprofilen (11, 12) des Profilaufbaus (10) befestigt ist.

3. Ladewagen nach einem der vorhergehenden Ansprüche, wobei die Bespannung (13) innenseitig auf dem Profilaufbau (10) angebracht ist, insbesondere auf der Innenseite der Längsprofile (11) des Profilaufbaus (10) aufliegt.

4. Ladewagen nach dem vorhergehenden Anspruch, wobei die Stehprofile (12) auf einer Außenseite der Längsprofile (10) angeordnet sind.

5. Ladewagen nach einem der vorhergehenden Ansprüche, wobei der obere Teil (9o) der Seitenwände (9) unter Verformung der Bespannung (13) zusammenklappbar ist.

6. Ladewagen nach dem vorhergehenden Anspruch, wobei die Längsprofile (11) durch Verschwenken der Stehprofile (12) aufeinander fahrbar sind.

7. Ladewagen nach einem der vorhergehenden Ansprüche, wobei die Bespannung (13) mittels Gleitern oder Gleitbefestigungselementen (14, 15, 16) an einem Längsprofil (11) des Profilaufbaus (10) verschieblich befestigt ist, wobei vorzugsweise die genannten Gleitbefestigungselemente voneinander beabstandet entlang des Längsprofils (11) verteilt angeordnet sind.

8. Ladewagen nach einem der vorhergehenden Ansprüche, wobei die Bespannung (13) mittels eines Befestigungsseils (14) an dem Profilaufbau (10) befestigt ist, wobei das genannte Befestigungsseil (14) abwechselnd an der Bespannung (13) und dem Profilaufbau (10) angelenkt und/oder befestigt ist, wobei das Befestigungsseil (14) vorzugsweise längsverschieblich an der Bespannung (13) und/oder längsverschieblich am Profilaufbau (10) befestigt ist.

9. Ladewagen nach dem vorhergehenden Anspruch, wobei das genannte Befestigungsseil (14) durch Taschen (15) oder Ösen an der Bespannung (13) hindurchgeführt ist und/oder an Ösen (16) und/oder Haken und/oder formschlüssig am Profilaufbau (10) eingehängt ist.

10. Ladewagen nach einem der beiden vorhergehenden Ansprüche, wobei das Befestigungsseil (14) elastisch längbar ist.

11. Ladewagen nach einem der vorhergehenden Ansprüche, wobei die Bespannung (13) lösbar an der jeweiligen Seitenwand (9) befestigt ist.

12. Ladewagen nach dem vorhergehenden Anspruch in Verbindung mit einem der Ansprüche 8 bis 10, wobei das Befestigungsseil (14) am Profilaufbau (10) ein- und aushängbar besfestigt, vorzugsweise mittels verschließbarer Karabinerhaken ein- und aushängbar ist.

## Claims

1. Agricultural loader for agricultural crop having a pick-up device (5) for picking up crop from the ground, a crop store (8) for storing the picked-up crop, and a scraper floor (18) for distributing and conveying the crop in the crop store (8), wherein the crop store (8) comprises side walls (9), which, at least in their upper part (9o), have a bar-like or truss-like profile structure (10) consisting of longitudinal and upright profiles (11, 12), wherein the side walls (9) can be collapsed by pivoting said upright profiles (12) about horizontal transverse axes (17), in an articulated manner with the longitudinal profiles (11), **characterised in that** the side walls (9) are clad in the region of said profile structure (10) with a flat, cloth-like flexible covering (13), which is guided longitudinally displaceably on said side walls (9) at its upper and/or lower edge section (130, 13U).

2. Agricultural loader according to the preceding claim, wherein said covering (13) comprises a net or tarpaulin attached to the longitudinal and/or upright profiles (11, 12) of the profile structure (10).

3. Agricultural loader according to any one of the preceding claims, wherein the covering (13) is attached to the inside of the profile structure (10), in particular resting on the inside of the longitudinal profiles (11) of the profile structure (10).

4. Agricultural loader according to any one of the preceding claims, wherein the upright profiles (12) are arranged on an outside of the longitudinal profiles (10).

5. Agricultural loader according to any one of the preceding claims, wherein the upper part (9o) of the side walls (9) can be collapsed while deforming the covering (13).

6. Agricultural loader according to the preceding claim, wherein the longitudinal profiles (11) can be moved on top of each other by pivoting the upright profiles (12).

7. Agricultural loader according to any one of the preceding claims, wherein the covering (13) is displaceably fastened to a longitudinal profile (11) of the profile structure (10) by means of sliders or sliding fastening elements (14, 15, 16), wherein preferably said sliding fastening elements are arranged spaced apart from one another along the longitudinal profile (11).

8. Agricultural loader according to any one of the preceding claims, wherein the covering (13) is fastened to the profile structure (10) by means of a fastening cable (14), wherein said fastening cable (14) is alternately articulated and/or fastened to the covering (13) and the profile structure (10), wherein the fastening cable (14) is preferably longitudinally displaceably fastened to the covering (13) and/or longitudinally displaceably fastened to the profile structure (10).

9. Agricultural loader according to the preceding claim, wherein said fastening cable (14) is passed through pockets (15) or eyelets on the covering (13) and/or is hooked onto eyelets (16) and/or hooks and/or attached to the profile structure (10) in a form-fitting manner.

10. Agricultural loader according to either one of the two preceding claims,
wherein the fastening cable (14) can be elastically elongated.

11. Agricultural loader according to any one of the preceding claims, wherein a covering (13) is detachably attached to the respective side wall (9).

12. Agricultural loader according to the preceding claim in connection with any one of claims 8 to 10, wherein the fastening cable (14) is attached to the profile structure (10) in such a way that it can be hooked and unhooked, preferably by means of lockable snap hooks.

## Revendications

1. Chariot de chargement pour récolte agricole, avec un dispositif de ramassage (5) pour ramasser la récolte sur le sol, un magasin de récolte (8) pour stocker la récolte ramassée, ainsi qu'un fond mouvant (18) pour répartir et transporter la récolte dans le magasin de récolte (8), le magasin de récolte (8) comprenant des parois latérales (9) qui présentent, au moins dans leur partie supérieure (9o), une structure profilée (10) de type barre ou treillis composée de profilés longitudinaux et verticaux (11, 12), les parois latérales (9) peuvent être repliées sur elles-mêmes par pivotement desdits profilés verticaux (12) autour d'axes transversaux (17) horizontaux, avec liaison articulée avec les profilés longitudinaux (11), **caractérisé en ce que** les parois latérales (9) dans la zone de ladite structure profilée (10) sont revêtues d'un entoilage (13) plat, flexible à la manière d'une toile, qui est guidé sur sa section de bord supérieure et/ou inférieure (13O, 13U) de manière à pouvoir coulisser longitudinalement sur lesdites parois latérales (9).

2. Chariot de chargement selon la revendication précédente, dans lequel ledit entoilage (13) comprend un filet ou une bâche fixé(e) aux profilés longitudinaux et/ou verticaux (11, 12) de la structure profilée (10).

3. Chariot de chargement selon l'une quelconque des revendications précédentes, dans lequel l'entoilage (13) est placé du côté intérieur sur la structure profilée (10), notamment sur le côté intérieur des profilés longitudinaux (11) de la structure profilée (10).

4. Chariot de chargement selon la revendication précédente, dans lequel les profilés verticaux (12) sont agencés sur un côté extérieur des profilés longitudinaux (10).

5. Chariot de chargement selon l'une quelconque des revendications précédentes, dans lequel la partie supérieure (9o) des parois latérales (9) est repliable en déformant l'entoilage (13).

6. Chariot de chargement selon la revendication précédente, dans lequel les profilés longitudinaux (11) peuvent être déplacés l'un sur l'autre par pivotement des profilés verticaux (12).

7. Chariot de chargement selon l'une quelconque des revendications précédentes, dans lequel l'entoilage (13) est fixé de manière coulissante sur un profilé longitudinal (11) de la structure profilée (10) au moyen de patins ou d'éléments de fixation coulissants (14, 15, 16), lesdits éléments de fixation coulissants étant de préférence agencés en étant répartis de manière espacée les uns des autres le long du profilé longitudinal (11).

8. Chariot de chargement selon l'une quelconque des revendications précédentes, dans lequel l'entoilage (13) est fixé à la structure profilée (10) au moyen d'un câble de fixation (14), ledit câble de fixation (14) étant articulé et/ou fixé alternativement à l'entoilage (13) et à la structure profilée (10), le câble de fixation (14) étant de préférence fixé à l'entoilage (13) de manière à pouvoir coulisser longitudinalement et/ou à la structure profilée (10) de manière à pouvoir coulisser longitudinalement.

9. Chariot de chargement selon la revendication précédente, dans lequel ledit câble de fixation (14) est passé à travers des poches (15) ou des œillets sur l'entoilage (13) et/ou est accroché à des œillets (16) et/ou à des crochets et/ou par complémentarité de forme sur la structure profilée (10).

10. Chariot de chargement selon l'une quelconque des deux revendications précédentes, dans lequel l'élément de fixation (14) peut être allongé de manière élastique.

11. Chariot de chargement selon l'une quelconque des revendications précédentes, dans lequel l'entoilage (13) est fixé de manière amovible à la paroi latérale (9) respective.

12. Chariot de chargement selon la revendication précédente, en combinaison avec l'une quelconque des revendications 8 à 10, dans lequel le câble de fixation (14) est fixé à la structure profilée (10) de manière à pouvoir être accroché et décroché, de préférence peut être accroché et décroché au moyen de mousquetons verrouillables.
